(19) Europäisches Patentamt / European Patent Office / Office européen des brevets

(11) **EP 1 865 717 A1**

(12) **DEMANDE DE BREVET EUROPEEN**

(43) Date de publication:
**12.12.2007 Bulletin 2007/50**

(51) Int Cl.:
*H04N 7/01* (2006.01)

(21) Numéro de dépôt: **07109661.4**

(22) Date de dépôt: **05.06.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK YU**

(30) Priorité: **06.06.2006 FR 0605027**

(71) Demandeur: **STMICROELECTRONICS SA
92120 Montrouge (FR)**

(72) Inventeurs:
• **Eymard, Frankie
38360 SASSENAGE (FR)**
• **Barnichon, Christophe
38360 SASSENAGE (FR)**

(74) Mandataire: **Cabinet Plasseraud
52 rue de la Victoire
75440 Paris Cedex 09 (FR)**

(54) **Détecteur de phase de mouvement par regions**

(57) Un procédé de détection de cadence d'une séquence d'images. On compare (21,32) chaque pixel de chaque trame courante de la séquence d'images à au moins un pixel d'au moins une trame précédente. Une valeur de phase de mouvement de pixel (P(n)) est attribuée à chaque pixel de la trame en fonction du résultat desdites au moins une comparaisons. Pour chaque bloc de pixels de la trame courante, une valeur de phase de mouvement de bloc (B(n)) est déterminée (33) à partir des valeurs de phase de mouvement des pixels dudit bloc. La trame courante est segmentée (23) en au moins une région, chaque région comprenant un nombre entier de blocs, en fonction au moins des valeurs de phase de mouvement de bloc déterminées. On attribue à chaque région une valeur de phase de mouvement de région (R(n)) à partir des valeurs de phases de mouvement de bloc des blocs de ladite région.

FIG.2.

**Description**

L'invention concerne la détection de cadence d'une séquence d'images.

La détection de cadence d'une séquence d'images est basée sur la recherche d'un motif de cadence, par exemple « 10010 » parmi une séquence de bits représentatifs du mouvement d'une trame à l'autre.

Par cadence, on entend donc une répétition successive d'au moins un motif de cadence.

La détection de cadence peut conduire à trouver le format source d'une séquence d'images, ou à détecter une éventuelle absence de mouvement ("still pictures" en anglais).

Il existe en effet plusieurs formats source. Par exemple, une caméra vidéo peut permettre de capturer 50 ou 60 images par seconde. Le format film prévoit que les images filmées sur pellicule sont capturées avec une fréquence de 24 ou 25 images par seconde. Le nombre d'images par seconde peut être encore plus faible, par exemple autour de 8 images par seconde pour certains dessins animés japonais.

Il existe également plusieurs formats d'affichage. Le standard PAL ("Phase Alternating Line" en anglais), principalement utilisé en Europe, prévoit l'affichage de 50 trames par seconde. Le format NTSC ("National Television Standards Committee" en anglais), principalement utilisé aux Etats-Unis, prévoit l'affichage de 60 trames par seconde.

Par ailleurs, les standards usuellement utilisés en télévision prévoient un codage des images source en trames entrelacées (d'une demi-image) successives comprenant des trames ayant des lignes de pixels paires d'une image à afficher donnée entrelacées, c'est-à-dire alternées, avec des trames ayant seulement des lignes de pixels impaires d'une image à afficher suivante.

Plus généralement, selon le mode de balayage, une image est décomposée en une trame, deux trames, voire davantage. Dans la présente demande, le terme "trame" recouvre donc aussi bien une image complète qu'une demi-image, voire une plus petite fraction d'image.

Ainsi, lorsqu'une séquence d'images vidéo à 50 images par seconde est encodée selon le standard PAL, chaque image est réduite à une trame d'une demi-image, de parité alternée.

Selon un autre exemple, lorsqu'une séquence d'images au format film à 25 images par seconde est encodée selon le format PAL à 50 Hz, chaque image filmée est décomposée sur deux trames entrelacées.

Selon un autre exemple, lorsqu'une séquence d'images au format film à 24 trames par secondes est encodée selon le format NTSC à 60 images par seconde, chaque séquence de quatre images filmées consécutives est convertie en une séquence de dix trames d'une demi-image. Parmi ces dix trames, les trois premières proviennent par exemple d'une même première image filmée, les deux trames suivantes proviennent d'une deuxième image filmée, etc. Ainsi, deux des trois premières trames sont identiques. Une telle conversion est dite conversion 3:2 ("3-2 pulldown" en anglais).

Il existe bien d'autres types de conversion. On peut citer la conversion 2:2 ("2-2 pulldown" en anglais) d'un format film à 24 ou 25 images par seconde vers le format PAL à 50 Hz, la conversion 2:3 ("2-3 pulldown" en anglais) d'un format à 24 images par seconde vers un format NTSC, les conversions 3:2:3:2:2 lorsqu'une station de télévision élimine une trame sur douze d'une séquence provenant d'images au format film, les conversions 2:2:2:4 et 2:3:3:2 d'images capturées selon un format DVCAM, les conversions 5:5, 6:4 ou 8:7 pour la conversion d'images de dessins animés, etc.

La détection de cadence est basée sur des comparaisons de pixels appartenant à des trames successives, indicées n, afin de déterminer l'existence de mouvements d'une trame à l'autre. En effet, une conversion conduit typiquement à des variations brutales du mouvement. Par exemple, dans le cas d'une conversion 3:2, trois premières trames n-3, n-2, n-1, proviennent d'une même image filmée, de sorte que sensiblement aucun mouvement n'est détecté de l'une à l'autre de ces trames. Les deux trames suivantes n, n+1 proviennent d'une autre image filmée : un mouvement relativement élevé peut être détecté entre la troisième trame n-1 et la quatrième trame n, tandis que le mouvement entre la quatrième trame n et la cinquième trame n+1 est sensiblement nul. En analysant une séquence de bits représentatifs du mouvement, dite séquence de mouvements, déterminée par des comparaisons de pixels sur une séquence de trames, on peut repérer une répétition d'un motif et donc détecter qu'une conversion a été effectuée. La détection de cadence est ainsi basée sur une analyse de séquence de mouvements.

Pour une séquence de trames d'une demi image, ces comparaisons entre pixels peuvent par exemple faire intervenir des calculs de médian. Les comparaisons peuvent avoir lieu entre pixels de deux trames successives, n-1, n, normalement de parité opposée. On peut également comparer les pixels d'une trame n avec des pixels de la trame précédente de même parité n-2, etc.

Pour une séquence de trames d'une image entière, chaque pixel se retrouve d'une trame à l'autre, de sorte que les comparaisons de pixels sont relativement simples.

La détection de cadence peut être utilisée dans des applications variées.

Par exemple, un détecteur de cadence peut être couplé à un dispositif de désentrelacement.

Un dispositif de désentrelacement est utilisé pour reconstruire une image correspondant à une trame d'une demi-image. En effet, l'encodage vers le format entrelacé permet de réduire d'un facteur deux la quantité d'informations à transmettre. Cette diminution par deux a lieu cependant au détriment de la qualité des images, et ceci est d'autant plus sensible lorsqu'il s'agit d'images animées.

Dans le cas d'une acquisition vidéo, l'image que représente une première trame n-1 n'est pas tout à fait la même que celle représentée par la trame suivante n, puisqu'elles sont séparées par un intervalle de temps et que les objets représentés sont animés d'un mouvement. La simple superposition de deux trames successives ne permet donc pas de reconstruire une image à partir d'une séquence d'images au format vidéo entrelacé. Des algorithmes de désentrelacement doivent être mis en oeuvre, par exemple des algorithmes d'interpolation spatiale, spatio-temporelle, avec compensation du mouvement etc.

Dans le cas d'une acquisition selon le format film à 25 images par seconde, chaque image filmée est décomposée sur deux trames lors de l'encodage vers le format entrelacé à 50 images par seconde. La reconstruction d'une séquence d'images à partir d'une séquence de trames entrelacées peut alors être effectuée par une simple fusion de deux trames successives correspondant initialement à la même image filmée.

Il peut donc être intéressant, avant de mettre en oeuvre un algorithme de désentrelacement, de détecter si une séquence de trames entrelacées provient d'un format film. Si tel est le cas, on peut en effet reconstruire à l'identique la séquence d'images filmées par une simple fusion de trames ("field merging" en anglais).

De plus, la détection de cadence permet d'éviter d'appliquer des algorithmes de désentrelacement complexes à une séquence de trames entrelacées provenant d'un format film. Dans le cas décrit plus haut d'une séquence de trames résultant d'une conversion 3:2, le mouvement entre la troisième trame n-1 et la quatrième trame n correspond au mouvement entre deux images séparées d'1/24$^{ème}$ de seconde, c'est-à-dire un intervalle de temps relativement long. Le mouvement entre la quatrième trame n et la cinquième trame n+1 devrait être sensiblement nul, puisque ces trames proviennent de la même image. Compte tenu de ces variations brutales du mouvement d'une trame à l'autre, un algorithme de désentrelacement à compensation de mouvement risquerait de conduire à des artefacts lors de la reconstruction.

De manière plus générale, la détection de la cadence d'une séquence d'images peut permettre un désentrelacement plus simple et de meilleure qualité.

Selon un autre exemple, un détecteur de cadence peut être utilisé à des fins de compression. En effet, si par exemple une séquence de trames à 60 Hz résulte d'une conversion 3:2, chaque séquence de cinq trames comprend deux fois la même trame. Dit autrement, une trame sur cinq peut être retirée sans perte d'information. Un drapeau ("flag" en anglais) peut être positionné afin de signaler ces retraits. Selon un autre exemple, si aucun mouvement n'est détecté sur plusieurs trames successives, on peut, sans perte d'information, éliminer toutes ces trames successives à l'exception de deux trames de parité opposée. L'analyse de la séquence de mouvements peut ainsi contribuer à une compression relativement efficace.

Toutefois, une image affichée peut être réalisée à partir de plusieurs sources mixées. C'est par exemple le cas lorsque des sous-titres sont incrustés dans une séquence d'images d'un film, ou bien lorsque l'image est partitionnée afin de faire apparaître des zones distinctes, par exemple des cours de valeurs d'actions en bourse, ou bien encore des graphiques. Les trames d'une séquence donnée peuvent ainsi comprendre des zones émanant de différentes sources, par exemple une zone film ayant subi une conversion 3:2 et une zone vidéo directement acquise à 60 images par seconde.

En outre, certains algorithmes de compression appliquent un encodage tel qu'une conversion 2:2 peut être localement introduite. Par exemple, l'algorithme de compression DV ("Digital Video" en anglais) peut prévoir d'encoder certaines zones sur la base des portions de trame d'une demi image correspondantes, tandis que d'autres zones seront encodées sur la base de portions d'image correspondantes.

Pour effectuer une détection de cadence sur de tels matériaux mixés, il est connu de découper les trames en blocs, et d'effectuer une recherche du mouvement pour chaque bloc afin d'effectuer localement la détection de cadence. Pour chaque bloc, on effectue des comparaisons des pixels d'une trame courante avec des pixels d'une trame précédente, et éventuellement d'une trame suivante. Ces comparaisons conduisent à déterminer pour chaque pixel une valeur de phase de mouvement de pixel représentative du mouvement pour ce pixel. Puis, pour chaque bloc, on utilise les valeurs de phase de mouvement de pixel des pixels de ce bloc pour prendre une décision quant à une valeur de phase de mouvement de bloc de ce bloc. En mémorisant les valeurs de phase de mouvement de bloc de ce bloc d'une trame à l'autre, on établit un historique des mouvements de ce bloc. Une recherche de motif sur cet historique peut conduire à une détection d'une conversion. Pour chaque bloc, des paramètres peuvent être transmis à un dispositif de traitement, par exemple un dispositif de désentrelacement, ou bien à des moyens de compression selon l'application souhaitée.

Les blocs peuvent par exemple avoir une taille de 16x16 pixels sur une image affichée. Ainsi, à un écran de 720x576 pixels correspondent 1620 blocs. Pour chaque trame, 1620 transmissions de paramètres ont donc lieu.

La demande de brevet WO 02/056597 décrit un procédé dans lequel on identifie des objets sur plusieurs images. Un objet peut être défini en ce que les pixels de cet objet se déplacent dans ces images suivant un même modèle de mouvement. Pour chaque objet identifié, on procède à une détection de cadence et une décision est prise.

La présente invention permet de réduire le nombre de transmissions au dispositif de traitement, et ce de manière relativement simple.

Selon un premier aspect, l'invention a pour objet un procédé de détection de cadence d'une séquence d'images. Pour chaque trame courante de la séquence d'images, on compare chaque pixel d'un groupe de pixels de la trame courante à au moins un pixel d'au moins une trame précédente. On attribue à chaque pixel du groupe de pixels de la trame courante une valeur de phase de mouvement de pixel en fonction du résultat desdites au moins une comparaisons. Pour chaque bloc de pixels d'un groupe de blocs de la trame courante, une valeur de phase de mouvement de bloc est déterminée à partir des valeurs de phase de mouvement des pixels de ce bloc. La trame courante est segmentée en au moins une région, chaque région comprenant un nombre entier de blocs, en fonction au moins des valeurs de phase de mouvement de bloc déterminées. On attribue à chaque région une valeur de phase de mouvement de région à partir des valeurs de phase de mouvement de bloc des blocs de cette région.

Ainsi, on peut prévoir de transmettre à un dispositif de traitement des données obtenues à partir d'au moins une partie des au moins une valeur de phase de mouvement de région attribuées. Pour chaque région obtenue, ou bien pour une partie des régions obtenues, par exemple seulement une éventuelle région pour laquelle une conversion film a été détectée, une valeur de phase de mouvement de région, ou bien un ou des paramètres obtenus à partir de la valeur de phase de mouvement de région, peuvent être transmis en vue d'un traitement, par exemple d'un désentrelacement. L'invention permet de limiter le nombre de transmissions à une transmission par région, et non par bloc de pixels comme dans l'art antérieur.

On utilise les valeurs de phase de mouvement de bloc pour segmenter la trame courante en régions. La segmentation est ainsi relativement simple à mettre en oeuvre.

La présente invention n'est pas limitée par la nature des trames. Pour un dispositif de traitement comprenant un dispositif de désentrelacement, chaque trame correspond à une demi image. Pour un dispositif de traitement comprenant un dispositif de compression, chaque trame peut correspondre à une image entière.

Classiquement, le procédé selon un aspect de l'invention est appliqué à tous les pixels et à tous les blocs de la trame courante, c'est-à-dire que le groupe de pixels et le groupe de blocs comprennent tous les pixels et tous els blocs respectivement de la trame courante. Néanmoins, on peut prévoir de n'effectuer les étapes d'attribution des valeurs de phases de mouvement de pixel et de détermination des valeurs de phase de mouvement de blocs qu'à certains pixels et blocs respectivement de la trame courante.

Classiquement, ce procédé est appliqué à chaque trame de la séquence. On peut toutefois prévoir de ne l'appliquer que périodiquement, à un rythme de par exemple une trame sur dix, ou bien de n'appliquer certaines étapes, comme la segmentation, que périodiquement.

Une région peut comprendre un ou plusieurs blocs, et même aucun bloc.

Par abus de langage, on utilisera les expressions « phase de mouvement de pixel », « phase de mouvement de bloc » et « phase de mouvement de région » pour désigner les valeurs de phase de mouvement de pixel, bloc et région respectivement.

La segmentation peut par exemple être effectuée à partir des phases de mouvement de blocs seulement. La segmentation peut par exemple conduire à dessiner des contours de région, chaque région comprenant au moins une proportion donnée des blocs ayant une même phase de mouvement. Cette phase de mouvement est attribuée à la région en tant que phase de mouvement de région. On peut prévoir de ne transmettre à un dispositif de traitement que les phases de mouvement de région, et pour chaque région, une indication des blocs de cette région, par exemple le contour de la région.

Toutefois, l'étape de segmentation est avantageusement effectuée également en utilisant au moins une région obtenue lors de la segmentation effectuée sur une trame précédente. Par abus de langage, on dira que l'étape de segmentation est effectuée en fonction d'une segmentation effectuée sur une trame précédente, dite segmentation précédente. Ainsi, les régions peuvent relativement peu varier d'une trame à l'autre, le caractère récursif de la segmentation permettant une plus grande stabilité. De plus, on peut ainsi réduire encore le volume des données à transmettre. Par exemple, on peut prévoir de ne transmettre pour chaque région qu'un indicatif de la région et la phase de mouvement de région associée.

Par exemple, lors de la segmentation, on peut présélectionner les blocs qui appartenaient à une région donnée lors de la segmentation de la trame précédente. On regarde si les phases de mouvement de bloc des blocs présélectionnés font apparaître une phase de mouvement dominante. Dans ce cas, les blocs de la région restent inchangés et on attribue à la région la phase de mouvement dominante en tant que phase de mouvement de bloc.

Avantageusement, l'étape de segmentation est effectuée en utilisant au moins une valeur de phase de mouvement de région obtenue pour la trame précédente. En effet, on peut s'attendre à ce qu'à une région donnée corresponde une conversion donnée, ou bien un mode vidéo etc. On peut ainsi utiliser la phase de mouvement de région précédente d'une région et la phase de mouvement de bloc d'un bloc de pixels pour déterminer si ce bloc appartient à cette région. Avantageusement, mais de façon non limitative, on utilisera à la fois la segmentation précédente et la (ou les) phase(s) de mouvement de région précédente(s) pour effectuer la segmentation.

Avantageusement, on utilisera une pluralité de phases de mouvement de région obtenues sur une pluralité de trames. On peut ainsi savoir de façon relativement certaine à quelle(s) phase(s) de mouvement s'attendre pour les blocs de la région.

De manière générale, la présente invention n'est pas limitée par la façon dont la segmentation est effectuée, pourvue que celle-ci fasse intervenir les phases de mouvement de bloc.

Avantageusement, pour au moins une région, un historique de la région est mis à jour à l'aide de la phase de mouvement de région attribuée à cette région. Cet historique peut par exemple comprendre un historique des phases de mouvement de région, ou bien encore dériver d'un historique des phases de mouvement de région. Un motif de cadence est recherché dans cet historique.

Ainsi, la détection de cadence s'effectue au niveau régional. Le procédé nécessite ainsi relativement peu de ressources pour la détection. On peut par exemple prévoir un jeu de registres de détection de cadence pour chaque région, et non pour chaque bloc comme dans l'art antérieur.

Alternativement, on peut prévoir une mise à jour d'un historique et une recherche de motif pour chaque bloc, les conversions éventuellement détectées étant utilisées pour réaliser la segmentation en région.

L'utilisation d'une ou plusieurs phases de mouvement de région précédentes, pour la segmentation ou pour la mise à jour d'historiques, n'est pas liée à l'utilisation de la segmentation précédente pour la segmentation de la trame courante. On peut par exemple prévoir d'effectuer la segmentation sans utiliser le fait que tel bloc appartient à telle région sur la trame précédente, puis de comparer les régions ainsi obtenues pour la trame courante aux régions de la trame précédente. Si une région est suffisamment proche d'une région précédente, alors les phases de mouvement de région de la région précédente peuvent être utilisées pour poursuivre la segmentation ou pour mettre à jour un historique des phases de mouvement de région de la région.

Selon un deuxième aspect, l'invention a pour objet un dispositif détecteur de cadence d'une séquence d'images, comprenant un détecteur de phase de mouvement de pixel agencé pour comparer les pixels d'un groupe de pixels de chaque trame courante de la séquence d'images à au moins un pixel d'au moins une trame précédente, et pour attribuer à chaque pixel du groupe de pixels de la trame courante une valeur de phase de mouvement de pixel en fonction du résultat desdites au moins une comparaisons. Des moyens de filtrage statistiques par bloc permettent, pour chaque bloc de pixels d'un groupe de blocs de pixels de la trame courante, de déterminer une valeur de phase de mouvement de bloc à partir des valeurs de phase de mouvement des pixels dudit bloc. Une unité de segmentation permet de segmenter la trame courante en au moins une région, en fonction au moins des valeurs de phase de mouvement de bloc déterminées. Des moyens de calcul permettent d'attribuer une valeur de phase de mouvement de région à chaque région à partir des valeurs de phase de mouvement de bloc des blocs de ladite région.

Le dispositif détecteur de cadence permet de mettre en oeuvre le procédé selon le premier aspect de l'invention. La segmentation en régions permet des communications relativement rapides entre le dispositif détecteur et un dispositif tiers, par exemple un dispositif de compression.

Avantageusement, une mémoire de carte des régions permettant de mémoriser des paramètres d'au moins une région obtenue lors d'une segmentation effectuée sur une trame précédente est reliée à l'unité de segmentation. Ainsi, la segmentation s'effectue à l'aide d'une segmentation effectuée pour une trame précédente.

On peut avantageusement prévoir pour au moins une région, des moyens de mise à jour d'un historique de la région, et des moyens de recherche dans l'historique d'un motif de cadence.

Selon un troisième aspect, l'invention a pour objet un système de traitement d'une séquence d'images, comprenant un dispositif détecteur de cadence selon le deuxième aspect de l'invention, et un dispositif de traitement relié au dispositif détecteur de cadence. Le dispositif de traitement utilise des résultats obtenus par le dispositif détecteur de cadence pour effectuer un traitement sur les trames, par exemple un désentrelacement ou une compression.

Selon un quatrième aspect, l'invention a pour objet un poste de télévision incorporant un système de traitement selon le troisième aspect de l'invention.

Selon un cinquième aspect, l'invention a pour objet un décodeur de télévision numérique incorporant un système de traitement selon le troisième aspect de l'invention.

Bien entendu, le système de traitement peut alternativement être incorporé dans d'autres dispositifs.

D'autres particularités et avantages de la présente invention apparaîtront dans la description ci-après.

La figure 1 montre schématiquement un exemple de système de traitement selon un mode de réalisation de l'invention.

La figure 2 montre schématiquement et de façon plus détaillée le détecteur de cadence illustré sur la figure 1.

La figure 3 montre schématiquement et de façon plus détaillée le détecteur de mouvement représenté sur la figure 2.

La figure 4 montre schématiquement un exemple de filtre passe-bas destiné à un premier étage du détecteur de mouvement représenté sur la figure 3.

La figure 5A montre un exemple de séquence de trames provenant d'images acquises selon un format vidéo.

Les figures 5B à 5E montrent des exemples d'images correspondant aux trames de la figure 5A.

La figure 6A montre un exemple de séquence de trames provenant d'images acquises selon un format film.

Les figures 6B à 6E montrent des exemples d'images correspondant aux trames de la figure 6A.

La figure 7 est un exemple d'algorithme susceptible d'être exécuté par un étage de détection de phase de mouvement de pixel du détecteur de mouvement représenté sur la figure 3.

Les figures 8A à 8D montrent d'autres exemples d'images correspondant à une séquence de trames provenant d'images acquises selon un format film.

La figure 9 est un exemple d'algorithme susceptible d'être exécuté par un étage de filtrage statistique par bloc du détecteur de mouvement représenté sur la figure 3.

La figure 10 montre schématiquement et de façon plus détaillée une partie du détecteur de cadence représenté sur la figure 2.

La figure 11 montre un exemple d'empilement sur divers masques pour une image donnée.

La figure 12 est un exemple d'algorithme de segmentation susceptible d'être mis en oeuvre par l'unité de statistiques et de segmentation représenté sur la figure 10.

La figure 13 est un exemple d'algorithme de calcul de statistiques en vue d'attribuer une phase de mouvement de région à chaque région.

La figure 14 est un exemple d'algorithme susceptible d'être exécuté par l'unité de contrôle de détection représentée sur la figure 10.

La figure 15 est un schéma illustrant un filtrage des régions susceptible d'être effectué par le filtre des régions représenté sur la figure 2.

La figure 16 est un exemple d'algorithme susceptible d'être exécuté par le filtre des régions de la figure 2.

La figure 17 est un exemple d'algorithme de fusion de régions.

## Système de désentrelacement

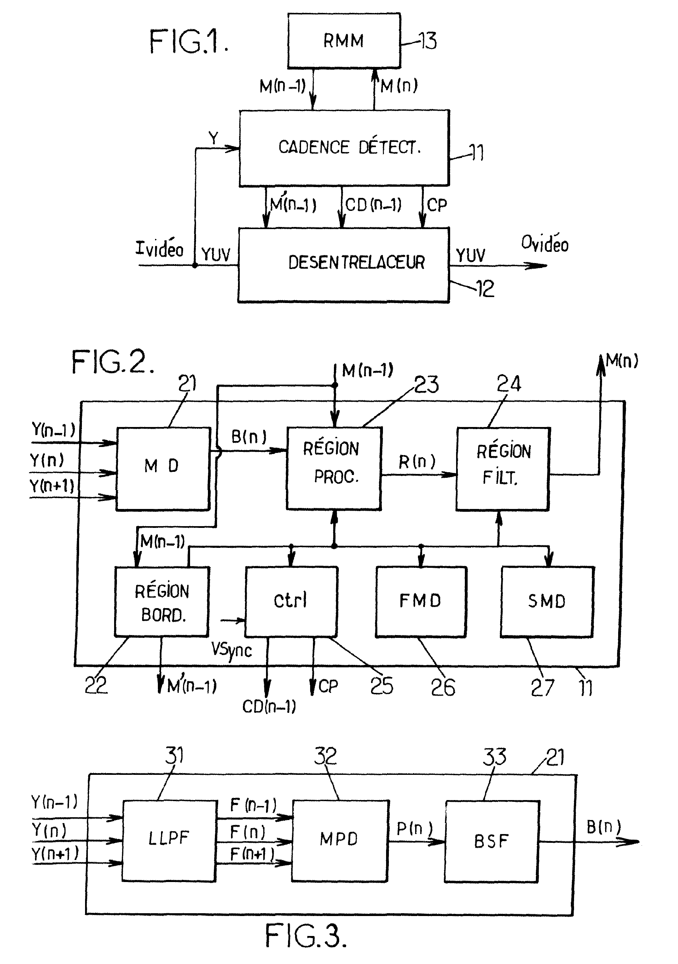

La figure 1 montre schématiquement un système de traitement d'une séquence d'images, ici un système de désentrelacement, selon un mode de réalisation de l'invention.

Dans le mode de réalisation illustré, un détecteur de cadence 11 est couplé à un dispositif de désentrelacement 12. Bien entendu, le détecteur de cadence selon l'invention peut être utilisé dans d'autres applications. A titre d'exemple, le détecteur de cadence peut être relié à un dispositif de compression, afin de permettre de repérer des trames redondantes et de contribuer ainsi à une compression efficace.

Dans le mode de réalisation illustré, seuls les pixels de luminance Y ("luma pixels" en anglais) d'une entrée vidéo $I_{video}$ sont utilisés par le détecteur de cadence 11. Alternativement, une détection du mouvement plus complexe et plus fiable pourrait être mise en oeuvre sur la base de comparaisons de pixels de chrominance ("chroma pixels" en anglais).

Une mémoire de carte des régions 13 ou RMM (de l'anglais "region map memory") est prévue afin de mémoriser une segmentation en régions précédente. Les trames sont découpées en blocs de 16x8 pixels, c'est-à-dire que les images correspondantes sont partagées en blocs de 16x16 pixels. La RMM 13 conserve des indications quant à l'appartenance de chaque bloc d'une trame précédente à telle ou telle région. Ces indications sont utilisées lors de la segmentation en régions.

Le format 16x16 pixels est classiquement utilisé en compression, de sorte que l'utilisateur est habitué à voir apparaître des artefacts sur les frontières de blocs de cette taille. En outre, les zones provenant de sources différentes ont souvent des frontières communes avec ce découpage classique en blocs de 16x16 pixels. On limite ainsi le nombre de blocs à cheval sur plusieurs zones. Bien entendu, l'invention n'est pas limitée par la taille des blocs.

Une carte des régions obtenue pour la trame précédente M'(n-1) peut être transmise au désentrelaceur 12, ainsi que d'autres données, par exemple un motif de cadence éventuellement détecté pour une région (ou CP, de l'anglais "cadence pattern"), et des données de statut (ou CD(n-1), de l'anglais "cadence data").

## Détecteur de cadence

La figure 2 montre schématiquement et de façon plus détaillée le détecteur de cadence illustré sur la figure 1.

Le détecteur de cadence 11 comprend un détecteur de mouvement 21 ou MD (de l'anglais "motion detector") recevant en entrée des trames de luminance courante Y(n), précédente Y(n-1) et suivante Y(n+1).

Le détecteur de mouvement 21 permet de déterminer une phase de mouvement de bloc B(n) pour chaque bloc de la trame courante.

Un processeur de région 23 utilise les phases de mouvement de bloc B(n) reçues du détecteur de mouvement 21, ainsi que la segmentation précédente M(n-1) reçue de la mémoire de carte des régions (référence 13 sur la figure 1), pour effectuer une segmentation de la trame en régions.

En outre, un détecteur de mode de film 26 ou FMD (de l'anglais "film mode detector") permet d'effectuer une recherche de motif de cadence sur des historiques de phases de mouvement de région. Cette recherche est effectuée au niveau régional ("region-based" en anglais).

Un détecteur d'absence de mouvement 27 ou SMD (de l'anglais "still mode detector") est également utilisé au niveau régional.

Le processeur de région 23, le FMD 26 et le SMD 27 peuvent utiliser des données communes. Ces données sont mémorisées dans des registres partagés de contrôle et de statuts ("control and status registers" en anglais) d'une unité de contrôle 25. Ces registres sont doubles ("double-buffered registers" en anglais) et synchronisés sur un signal de synchronisation verticale nommé VSync. On peut ainsi à la fois mettre à jour un registre lors du traitement de la trame courante n et utiliser la valeur de ce registre pour la trame précédente n-1.

L'algorithme de segmentation peut par exemple prévoir de partir des régions précédemment obtenues, en utilisant les indications mémorisées dans la RMM 13. Puis on examine si chaque bloc d'une région précédente appartient toujours à la région en utilisant, outre la phase de mouvement de bloc de ce bloc, un historique de la région mémorisé dans l'unité de contrôle 25 et un éventuel motif de cadence détecté par le FMD 26 pour cette région. Les phases de mouvement de région précédentes sont ainsi utilisées pour éventuellement éliminer des blocs de la région.

Des données de statut mémorisées dans l'unité de contrôle 25 peuvent être utilisées également lors de l'algorithme de segmentation. Par exemple, si on détecte le même motif et la même phase pour deux régions distinctes, on peut prévoir de positionner un drapeau, ce positionnement entraînant une fusion des deux régions lors de la prochaine segmentation. Les régions sont ainsi amenées à diminuer de taille par érosion, en perdant progressivement des blocs, et à augmenter de taille par paliers, via des fusions.

Un filtre des régions 24 permet de filtrer les régions R(k,n) obtenues par la segmentation, k indiçant les régions, avant mémorisation dans la mémoire de carte des régions (référence 13 sur la figure 1). Si par exemple des blocs appartenant à une même région entourent un bloc n'appartenant pas à cette région, on considère que ce bloc entouré appartient à la région. Ce filtrage permet de rendre les régions plus homogènes et renforce l'immunité au bruit.

Par ailleurs, les régions identifiées comme résultant d'une conversion depuis un format différent du format vidéo, par exemple un format film, sont destinées à être désentrelacées par une simple fusion de trames ("field merging" en anglais). Si cette fusion était appliquée à des pixels acquis suivant un format vidéo, elle ferait apparaître des artefacts visibles connus sous le nom d'effet de peigne (« comb effect » en anglais). Aussi des moyens de traitement des bordures 22 sont-ils prévus afin d'entourer chaque région vidéo de la trame précédente d'une bordure constituée par les blocs limitrophes. En sortie des moyens de traitement des bordures 22, la segmentation modifiée ainsi obtenue M'(n-1) est transmise au dispositif de désentrelacement (12 sur la figure 1).

**Détecteur de mouvement**

La figure 3 montre schématiquement et de façon plus détaillée le détecteur de mouvement représenté sur la figure 2.

Le détecteur de mouvement met en jeu des comparaisons de trames.

Toutefois, même dans le cas de trames identiques, les différences mesurées risquent d'être non nulles du fait du bruit. Aussi utilise-t-on un détecteur de mouvement capable de fonctionner avec des signaux sur plusieurs niveaux plutôt que simplement des signaux binaires. Dit autrement, on préférera travailler avec des probabilités de mouvement plutôt qu'avec une simple indication de la présence ou de l'absence du mouvement.

En outre, afin de réduire le nombre d'erreurs de détection dans des zones sans mouvement, le premier étage 31 du détecteur de mouvement 21 comprend un filtre passe-bas sur les pixels de luminance ou LLPF (de l'anglais "luma low-pass filter").

Par exemple, pour chaque pixel de luminance, une moyenne des pixels entourant ce pixel peut être calculée selon la formule :

$$F(x,y,n) = \frac{1}{8}\sum_{i=-1}^{1}\sum_{j=-1}^{1}Y(x+i, y+2j, n)\times K(i,j) \, , \; y \bmod 2 = n \bmod 2$$

où Y(x,y,n) désigne la valeur du pixel de luminance situé à la colonne x et à la ligne y sur la trame n,

K(i,j) est une fonction égale à 1 sauf pour i=0 et j=0 où K(0,0) = 0, et

F(x,y,n) désigne la valeur filtrée du pixel de luminance situé à la colonne x et à la ligne y sur la trame n.

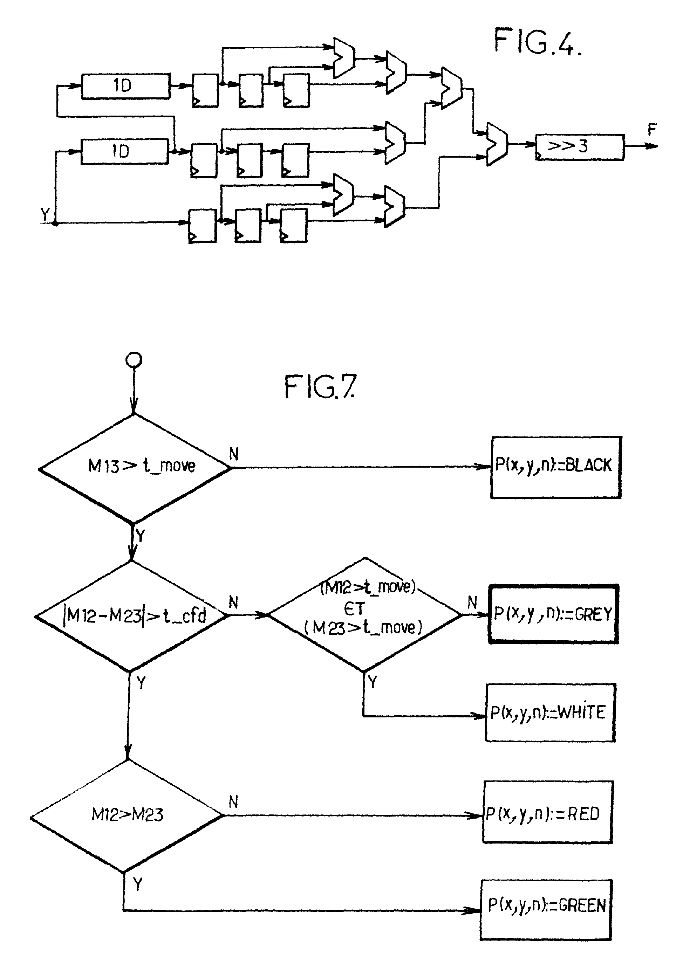

La figure 4 montre un exemple d'implémentation de ce filtrage. Ce dispositif comprend entre autres deux retardateurs d'une ligne, sept additionneurs et un registre à décalage comme représenté sur la figure 4.

Ce filtrage peut être effectué également pour les trames précédente et suivante, de sorte qu'on obtient en sortie du LLPF 31 trois trames filtrées F(n-1), F(n), F(n+1).

Le détecteur de mouvement 21 comprend en outre un deuxième étage 32 détecteur de phase de mouvement de pixel ou MPD (de l'anglais "Movement Phase Detector"). Le MPD 32 permet d'attribuer à chaque pixel une phase de mouvement de pixel P(n) à partir de comparaisons des pixels de luminance des trames filtrées F(n-1), F(n), F(n+1) issues du premier étage 31. Son fonctionnement est détaillé plus loin.

Le détecteur de mouvement 21 comprend en outre un troisième étage 33 filtre statistique par bloc, ou BSF (de l'anglais "block statistical filter"). Le BSF 33 permet, pour chaque bloc, de déterminer une phase de mouvement de bloc B(n) à partir des phases de mouvement des pixels P(n) dudit bloc. Le BSF 33 effectue à cet effet un filtrage statistique sur les phases de pixel P(n). Le BSF permet ainsi d'élire en tant que phase de mouvement de bloc d'un bloc donné la plus répandue parmi les phases de mouvement des pixels de ce bloc. Il en résulte une décimation ou sous échantillonnage de la phase de mouvement dans les directions verticale et horizontale. Le fonctionnement du BSF est détaillé plus loin.

**Détecteur de phase de mouvement de pixel**

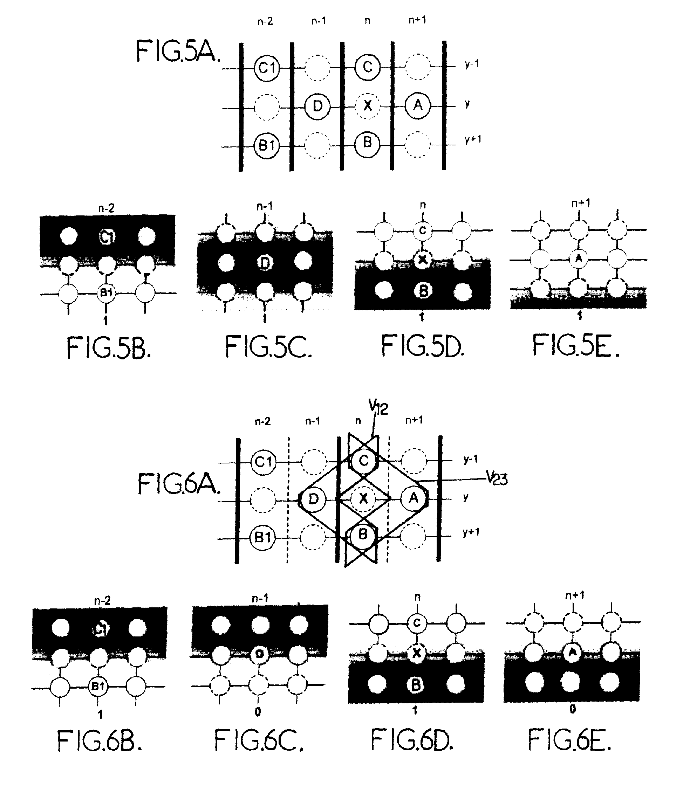

Les figures 5A à 5E, 6A à 6E, 7 et 8A à 8D permettent de décrire de façon plus détaillée le fonctionnement du deuxième étage 32.

Les figures 5A et 6A montrent, pour un pixel X(x,y) appartenant à une colonne indicée x et à une ligne indicée y" des exemples de séquences de trames indicées n. Les pixels représentés en pointillés sont les pixels appartenant aux lignes manquantes, c'est-à-dire les pixels dont les valeurs doivent être interpolées.

Les traits en gras entre deux trames indiquent que ces deux trames proviennent d'images différentes. Dit autrement, un mouvement peut éventuellement être détecté entre ces deux trames.

Les figures 5A à 5E se rapportent à une séquence de trames provenant d'images acquises selon un format vidéo, à par exemple 50 images par seconde. On parlera d'un mode vidéo.

On suppose que les images acquises représentent une fine barre horizontale sombre animée d'un mouvement vertical du haut vers le bas sur un fond clair à la vitesse apparente de 1 ligne par trame, comme le montrent les figures 5B à 5E. Chacune de ces figures illustre l'une des trames n-2, n-1, n et n+1 respectivement. Chaque trame provenant d'une image différente, les figures 5B à 5E montrent un déplacement progressif d'une figure à l'autre.

Les figures 6A à 6E se rapportent à une séquence de trames provenant d'images acquises selon un format film, à par exemple 25 images par seconde. Afin d'afficher ces données selon le format PAL, une conversion 2:2 a été effectuée. Dit autrement, chaque image au format film a été balayée sur deux trames entrelacées successives, afin de permettre une transmission à 50 trames par seconde. Pour un même objet filmé que pour les figures 5A à 5E, à savoir une fine barre horizontale animée d'un mouvement vertical à la vitesse apparente de 1 ligne par trame, les figures 6A à 6E illustrant chacune l'une des trames n-2, n-1, n et n+1 respectivement, montrent un mouvement relativement saccadé. En effet, le déplacement est nul entre les trames provenant de la même image filmée à un instant donné.

Pour chaque pixel situé à une position (x,y) sur une trame n, des métriques de mouvement M13(x,y,n), M12 (x,y,n) et M23(x,y,n) sont calculées par le MPD (référence 32 sur la figure 3). Pour plus de clarté, on appellera respectivement A(x,y,n), B(x,y,n), C(x,y,n) et D(x,y,n) les valeurs des pixels de luminance F(x,y,n+1), F(x,y+1,n), F(x,y-1,n) et F(x,y,n-1) à partir desquels sont effectuées les comparaisons entre trames.

Les métriques de mouvement M13(x,y,n), M12(x,y,n) et M23(x,y,n) sont calculées suivant les formules suivantes :

$$M13(x,n) = |A(x,y,n) - D(x,y,n)|$$
$$M12(x,y,n) = |D(x,y,n) - MEDIAN(D(x,y,n), B(x, y, n), C(x,y, n))|$$
$$M23(x, y, n) = |A(x,y,n) - MEDIAN(A(x,y,n), B(x,y,n), C(x, y, n))|$$

On applique ensuite des règles de décision pour attribuer à un pixel situé à une position (x,y) dans une trame n, une phase de mouvement P(x,y,n). A titre d'exemple, les règles suivantes peuvent être appliquées :

- une phase de mouvement film est détectable à la position (x,y) dans la trame n si

$$M13(x,y,n) > t\_move \text{ et } |M12(x,y,n) - M23(x,y,n)| > t\_cfd \ ;$$

- si une phase de mouvement film est détectable, une phase de mouvement film est détectée si

$$M12(x,y,n) > M23(x,y,n) \ ;$$

- si une phase de mouvement film est détectable, une phase d'absence de mouvement film est détectée si

$$M12(x,y,n) < M23(x,y,n) \; ;$$

- une phase de mouvement vidéo est détectée si les conditions suivantes sont vérifiées :

$M13(x,y,n) > t\_move$ et $|M12(x,y,n)-M23(x,y,n)| \leq t\_cfd,$ et
$M12(x,y,n) > t\_move$, et
$M23(x,y,n) > t\_move$.

Les seuils t_move et t_cfd représentent des seuils de mouvement et de différence de trames consécutives (en anglais "consecutive field difference") respectivement.

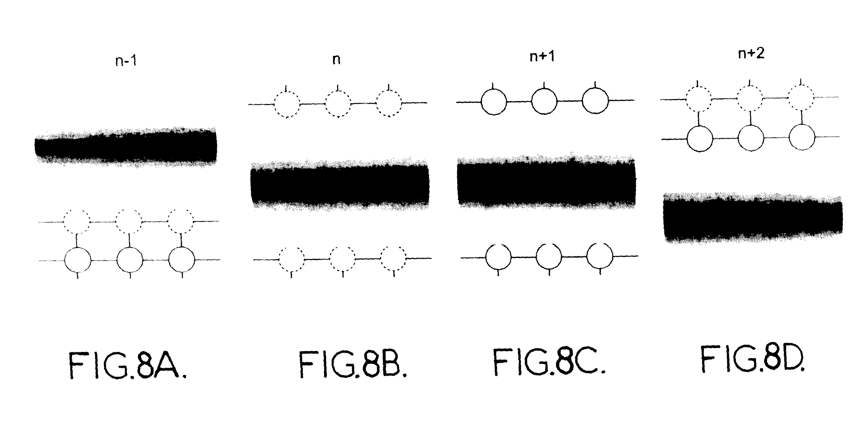

La figure 7 montre un exemple d'algorithme susceptible d'être mis en oeuvre par le MPD 32. Cet algorithme permet d'appliquer les règles de décision décrites ci-dessus. Selon la phase de mouvement détectée, on associe au pixel une couleur. Ainsi, le noir correspond à une absence de mouvement, le vert à une phase de mouvement film, le rouge à une phase d'absence de mouvement film, le blanc à une phase de mouvement vidéo et le gris à une indétermination.

Ainsi, sauf en cas de changement de scène, la plupart des pixels ont une phase de mouvement correspondant à la couleur noire. Ce n'est souvent qu'aux limites des objets en mouvement qu'un mouvement peut être détecté.

Par exemple, un bras en mouvement est filmé selon un format film à 25 images par seconde. Les images résultantes subissent une conversion 2:2, c'est-à-dire que chaque image est décomposée entre une première trame et une deuxième trame. Pour chaque première trame, le MPD attribue à des zones de pixels correspondants aux contours du bras la couleur verte. Du fait que la première trame ne provient pas de la même image au format film que la trame précédente, une phase de mouvement film est détectée pour ces pixels. En revanche, chaque deuxième trame provient normalement de la même image au format film que la trame précédente (la première trame). Pour chaque deuxième trame, le MPD attribue donc à sensiblement ces zones de pixels correspondants aux contours du bras la couleur rouge significative de la détection d'une conversion depuis un format film et d'une absence de mouvement depuis la trame précédente. Lorsque le MPD traite une telle séquence, des zones vertes et des zones rouges se succèdent de façon alternée.

Dans le cas de pixels provenant d'images au format vidéo, par exemple du texte d'un sous-titrage, la détection de phase de mouvement peut ne pas faire apparaître des zones de contours en mouvement aussi clairement. En particulier, les pixels des zones effectivement en mouvement peuvent facilement être associés à toute une palette des couleurs correspondant aux phases détectées, de sorte que ces zones sont colorisées par le MPD de façon non uniforme.

Dans le cas de la conversion 2:2 illustrée sur les figures 6A à 6E, la métrique M23(x,y,n) calculée pour le pixel X(x,y,n) ou F(x,y,n) est illustrée par la forme en V $V_{23}$ sur la figure 6A. La métrique M12(x,y,n) est illustrée par la forme en V $V_{12}$. Si la base d'une des formes en V est contrastée avec les deux branches de la forme en V, alors la métrique correspondante est élevée.

En se reportant aux figures 6C et 6E, il apparaît que M13(x,y,n) est relativement faible puisque les pixels A(x,y,n) et D(x,y,n) ont des valeurs relativement proches. Le mouvement risque donc de ne pas être détectable pour le pixel X(x,y,n).

Dans le cas d'un mouvement de la fine barre horizontale deux fois plus lent, comme représenté sur les figures 8A à 8D, la métrique M13 peut avoir une valeur relativement élevée, et la métrique M12 risque d'être inférieure à la métrique M23. On risque ainsi de détecter pour la trame n une phase d'absence de mouvement film (couleur rouge), alors qu'en réalité à la trame n correspond une phase de mouvement film (couleur verte).

Ces exemples montrent que le risque d'erreur de détection au niveau du pixel peut être relativement élevé, en particulier pour des objets fins et relativement peu mobiles. Toutefois, bon nombre d'objets filmés ont des dimensions largement supérieures au pixel et se déplacent à des vitesses apparentes supérieures à deux lignes par trame.

En outre, le filtre LLPF (31 sur la figure 3) contribue à diminuer la probabilité de fausse détection en abaissant le contraste des structures fines. En plus de ce filtrage en entrée, on peut prévoir d'ajuster conjointement les valeurs des seuils t_move, t_cfd, et des paramètres de filtrage statistique par bloc du BSF (33 sur la figure 3). On peut également prévoir de rendre ces valeurs variables en fonction d'une estimation du contraste et du bruit de l'image. Ainsi, si les objets sont peu contrastés, les valeurs des seuils t_move, t_cfd, et des paramètres de filtrage statistique par bloc du BSF 33 peuvent être relativement faibles. Les mouvements sont ainsi détectables même pour de relativement faibles valeurs de métriques ou de différences de métriques. On peut aussi prévoir de rendre ces valeurs variables en fonction de la taille des valeurs de luminance (8 bits ou 10 bits).

Filtre statistique par bloc

Une fois la phase de mouvement de pixel P(x, y, n) déterminée pour chaque pixel d'une trame, on effectue un filtrage statistique pour déterminer des phases de mouvement de bloc B(i, j, n), i et j indiçant ici la position de chaque bloc. Le BSF (33 sur la figure 3) est prévu à cet effet.

Des statistiques sont calculées pour chaque bloc à partir des 16x8 phases de mouvement de pixel P(x,y,n) des pixels de ce bloc. Pour chaque couleur, on compte le nombre de pixels du bloc auxquels on a attribué cette couleur :

$$COLOR(i, j, n) = \sum_{bloc} ONE(x, y, n, c) \text{, où}$$

c représente une couleur, par exemple le vert, et

$$ONE(x,y,n,c) = 1 \text{ si } P(x, y, n) = c$$

On compte également le nombre de pixels du blocs auxquels on attribué une couleur différente du noir, c'est-à-dire les pixels pour lesquels un mouvement est détecté :

$$GROUP(i, j, n) = \sum_{c \neq noir} \sum_{bloc} ONE(x, y, n, c)$$

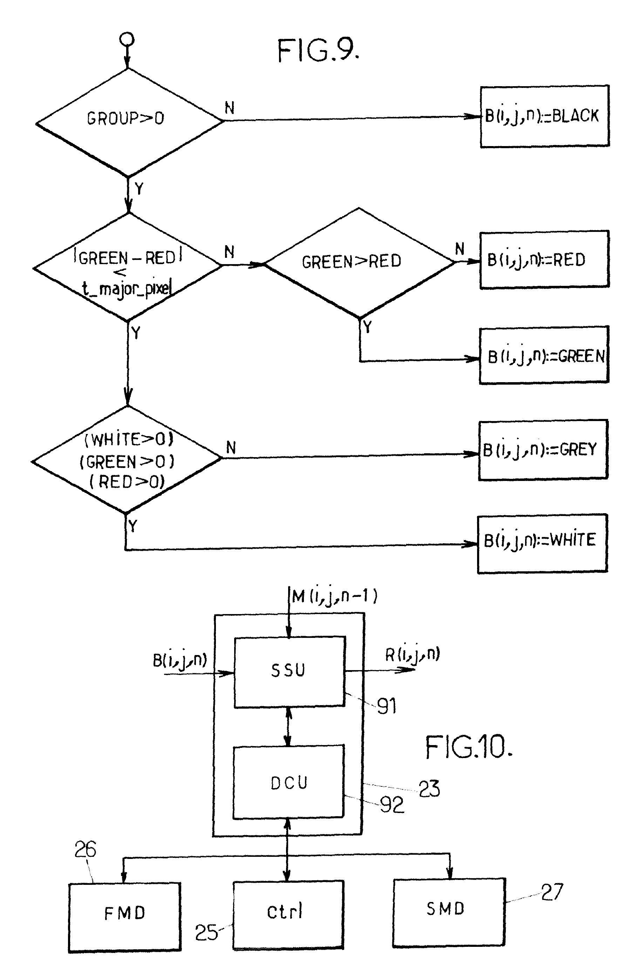

Les valeurs des variables COLOR(i,j,n) et GROUP(i,j,n) permettent de choisir une couleur pour le bloc, c'est-à-dire une phase de mouvement de bloc B(i,j,n), par exemple selon l'algorithme de la figure 9.

Le seuil t_major_pixel est utilisé pour décider si l'une des couleurs rouge ou verte prédomine nettement sur l'autre. Dit autrement, ce seuil est utilisé pour associer au bloc une phase de mouvement de bloc de type film. La valeur de ce seuil peut être déterminée empiriquement.

Segmentation en régions

Pour revenir à la figure 2, les phases de mouvement de bloc B(n) déterminées par le détecteur de mouvement 21 sont transmises au processeur de région 23 du détecteur de cadence 11.

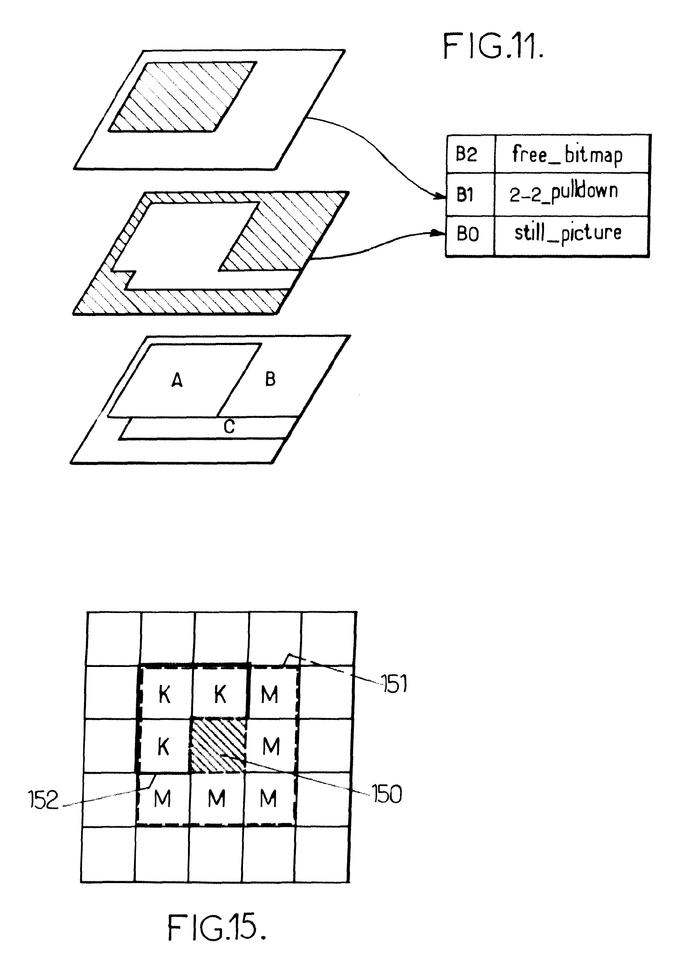

La figure 10 montre schématiquement et de façon plus détaillée une partie du détecteur de cadence 11, à savoir le processeur de région 23, le détecteur de mode film 26 ou FMD, le détecteur d'image fixe 27 ou SMD, et l'unité de contrôle 25.

Le processeur de région 23 comprend une unité de statistiques et de segmentation 91 ou SSU (de l'anglais "statistics and segmentation unit") et une unité de contrôle de détection 92 ou DCU (de l'anglais "detection control unit").

Le SSU 91 effectue une segmentation en régions en utilisant par exemple un algorithme décrit plus bas. Le DCU 92 supervise la détection de cadence pour chaque région, en utilisant le FMD 26. Le détecteur d'image fixe SMD 27 permet d'indiquer quelles régions contiennent seulement des images fixes ("still pictures" en anglais).

Une région est formée de parties d'image considérées comme présentant la même cadence et la même phase. La segmentation peut faire intervenir une représentation en masques, chaque masque contenant les blocs d'une région correspondante. Chaque masque peut être stocké dans la mémoire de carte des régions (référence 13 sur la figure 1) sous la forme d'une image binaire de blocs ("block-based bitmap" en anglais), dans laquelle chaque bloc est représenté par un bit à '0' ou '1', un '1' signifiant que le bloc correspondant appartient à la région.

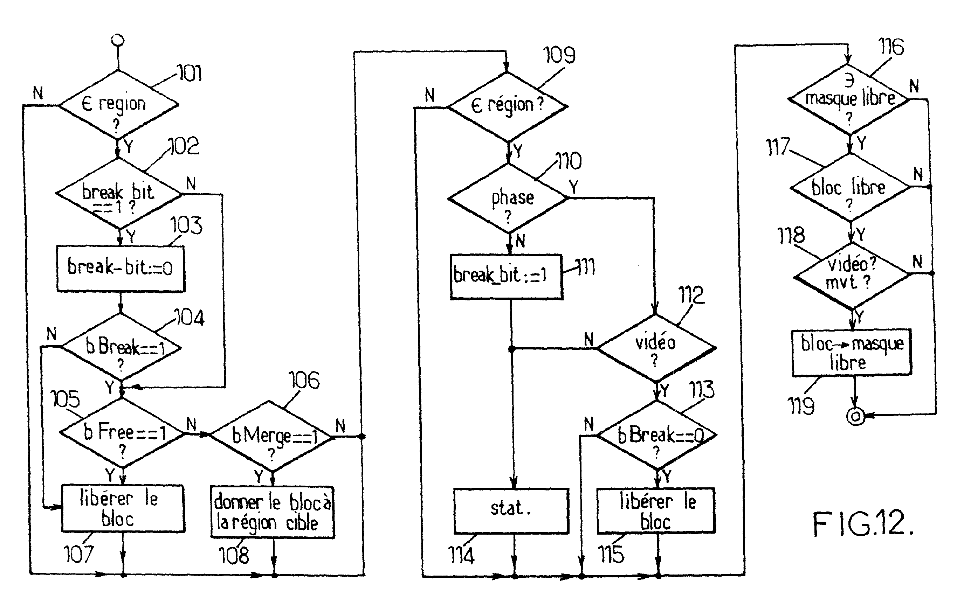

La figure 11 montre un exemple d'un tel empilement de masques pour une image comprenant des zones A, B, C provenant de différentes sources. Le masque still_picture formé par les bits B0(i,j,n) correspond à la région B qui ne contient pas de mouvement. Le masque 2-2_pulldown formé par les bits B1(i,j,n) correspond à la région A présentant une conversion 2:2. Le masque free_bitmap formé par les bits B2(i,j,n) est dit libre ("free bitmap" en anglais), car il correspond à une cadence non identifiée.

Lorsque tous les bits B0, B1, B2 d'un bloc donné sont à '0', le bloc est dit libre (« free block » en anglais). Un bloc de source vidéo dans la zone C peut présenter un bit B2 à '0' ou à '1'. Le bit B2 est mis à '1' lorsque le bloc libre est capturé dans le masque libre free_bitmap. Les conditions de capture ou de libération d'un bloc seront détaillées plus loin.

L'appartenance d'un bloc à tel ou tel masque est donc représentée par les valeurs des trois bits B0, B1, B2 pour ce bloc. Avec cette technique de codage ("one-hot" en anglais), un seul des bits B0, B1 ou B2 peut prendre la valeur '1' pour un bloc donné. On peut alternativement prévoir d'utiliser un codage binaire sur deux bits pour chaque bloc, ce qui permet d'indexer jusqu'à quatre masques. On peut aussi avantageusement utiliser une technique de codage d'image pour compresser la carte des régions. Un exemple d'une telle technique est le codage RLE (« Run-Level Encoding » en anglais).

La taille de la mémoire de carte des régions (référence 13 sur la figure 1) est déterminée par la technique de codage, le nombre de régions maximum, la taille des blocs et la résolution des images.

On peut également prévoir un bit break_bit supplémentaire pour chaque bloc, dit bit de rupture ("break bit" en anglais) et étant mis à '1' lorsque le bloc n'est pas en phase avec la cadence détectée précédemment pour la région à laquelle appartient a priori ce bloc.

**Unité de statistiques et de segmentation**

L'unité de statistiques et de segmentation 91 effectue une segmentation récursive basée sur la cadence.

initialement, tous les blocs sont libres, c'est-à-dire que les masques sont vides. Après le traitement d'une première trame, tous les blocs sont capturés dans le masque libre.

La figure 12 est un exemple d'algorithme de segmentation applicable à chaque bloc d'une trame n. Pour chaque bloc, on utilise la phase de mouvement de bloc B(i,j,n) correspondante, ainsi qu'une segmentation précédente pour déterminer les régions courantes R(i,j,n). On peut par exemple utiliser une précédente carte des régions ("region map" en anglais) M(i,j, n-1). Un test 101 est pratiqué sur par exemple des bits de masques de la précédente carte des régions M(i,j, n-1) afin de savoir si le bloc correspondant à ces bits appartient à l'un des masques.

Dans ce cas, un test 102 est également pratiqué quant à la valeur du bit break_bit de ce bloc, mémorisé dans la RMM, afin de vérifier que pour la trame précédente n-1, ce bloc était en phase avec le reste de la région. Dans le cas contraire, quelques étapes de test détaillées ci-dessous sont effectuées avant de libérer le bloc (étape 107).

Si le bit break_bit est à '1', le bit break_bit est tout d'abord remis à zéro (étape 103), puis un indice du masque auquel appartient le bloc est utilisé pour adresser un jeu de registres correspondant à ce masque et dans lesquels sont mémorisés des drapeaux de région. La valeur d'un drapeau de région dit de rupture et nommé bBreak est testée (étape 104). Ce drapeau est à '1' en cas de détection précédente d'une rupture de cadence, pour la trame n-1.. Une telle valeur de drapeau de région étant significative d'une édition de scène, il serait en effet dommage de détruire la région en libérant ses blocs un par un. Il est préférable de libérer tous les blocs de la région simultanément dans ce cas de figure.

Si le drapeau de région bBreak est à '0', le bloc est libéré immédiatement (étape 107) car il n'est plus en phase avec la cadence de la région.

Si le drapeau de région bBreak est à '1', un test (étape 105) est effectué quant à la valeur d'un drapeau de région bFree utilisé pour indiquer que tous les blocs de la région doivent être libérés. Si le drapeau bFree est positionné à '1', alors le bloc est libéré (étape 107).

Si le drapeau bFree est à '0', un test est pratiqué quant à la valeur d'un autre drapeau de région bMerge, utilisé pour indiquer que deux régions doivent être fusionnées en une région cible ("target region" en anglais) présentant le plus petit index de région, comme illustré par les étapes 106 et 108.

Si le bloc appartient toujours à une région (étape 109), une étape 110 de test de déphasage utilisant les phases de mouvement de région précédentes est effectuée. En particulier, si un motif a été détecté pour cette région, on peut s'attendre à une phase de mouvement de région donnée. Si la phase de mouvement de bloc B(i,j,n) indique un mouvement vidéo (couleur blanche) ou une absence de mouvement film (couleur rouge) alors qu'un mouvement film (couleur verte) est attendu, alors le bloc n'est pas en phase avec sa région. Il en est de même si la phase de mouvement de bloc B(i, j,n) indique un mouvement film (couleur verte) alors qu'aucun mouvement n'est attendu pour cette région. Si un tel problème de déphasage se produit, le bit break_bit du bloc est mis à '1' (étape 111).

L'algorithme comprend une étape 112 de test au cours de laquelle on estime si le bloc est susceptible de provenir d'une source vidéo. On examine pour cela si la phase de mouvement de bloc B(i,j,n) indique un mouvement vidéo (couleur blanche). Dans ce cas, et si aucune cadence particulière n'est détectée pour la région de ce bloc, alors le bloc est libéré (étape 115), à moins d'une rupture de cadence (étape de test 113).

Une phase de mouvement de région est déterminée pour chaque région. A cet effet, des statistiques sont calculées (étape 114), par exemple selon les formules suivantes :

$$ONE(i, j, n, c) = 1 \text{ si } B(i, j, n) = c \,,$$

où c représente une couleur, par exemple le vert,

$$COLOR(n) = \sum_{region} ONE(i, j, n, c), \text{ où } c = COLOR, \text{ et}$$

$$GROUP(n) = \sum_{c \neq noir} \sum_{region} ONE(i, j, n, c)$$

L'étape 114 est avantageusement effectuée pour les blocs non susceptibles de provenir d'une source vidéo. En effet, plus le nombre de blocs vidéo est faible, plus la détection d'un mode film est aisée à effectuer.

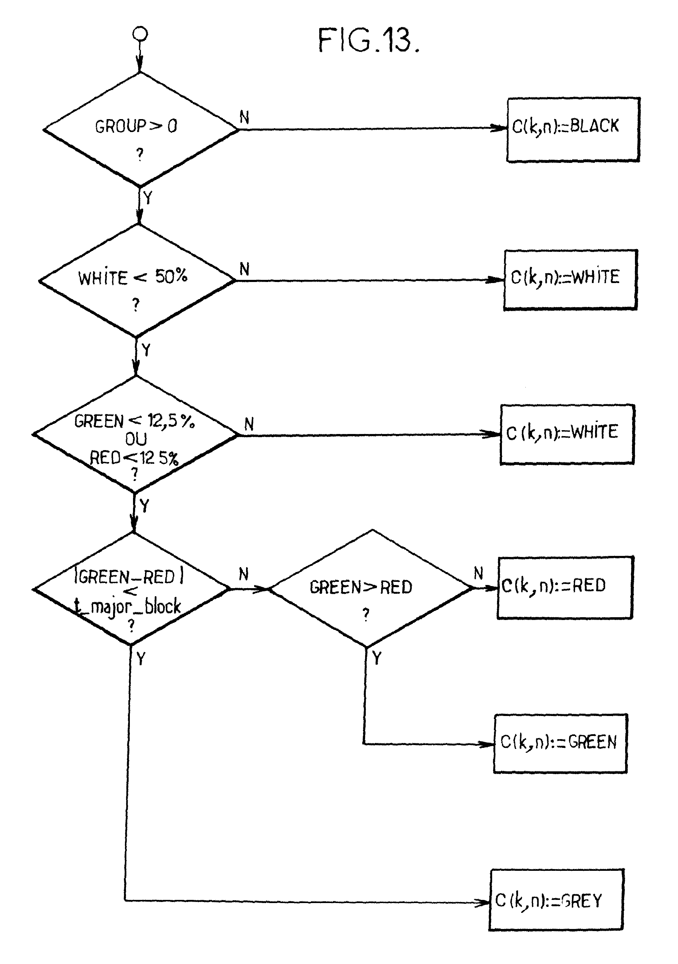

Ces statistiques sont transmises au DCU (référence 92 sur la figure 10) afin de décider de la phase de mouvement de la région. L'algorithme de la figure 13, détaillé plus loin, peut être utilisé à cet effet.

Lorsqu'un masque libre est disponible (étape de test 116), un bloc libre est attribué à ce masque (étape 119) à condition que la phase de mouvement de ce bloc n'indique pas de mouvement vidéo ni de mouvement répété ("moving again" en anglais) (étape 118). On considère qu'un mouvement répété est indiqué si la couleur votée pour cette région à la trame précédente est le blanc ou le vert, c'est-à-dire une couleur indicative d'un mouvement, et que la phase de mouvement du bloc indique une phase de mouvement film. L'étape 118 permet ainsi d'éviter d'attribuer à une région des blocs dont on peut supposer qu'ils ne feront pas ressortir de cadence particulière.

### Registres de contrôle et de statuts

L'unité de contrôle (référence 25 sur la figure 2) permet de stocker un certain nombre de registres de statuts, utilisables par l'unité de statistiques et de segmentation (référence 91 sur la figure 10), l'unité de contrôle de détection (référence 92 sur la figure 10), le FMD (référence 26 sur la figure 2) et/ou le SMD (référence 27 sur la figure 2). Le tableau ci-dessous représente ces registres :

| Taille | Nom | description |
| --- | --- | --- |
| 1x40 bits | bStill | 1 en cas de détection d'absence de mouvement |
| 1x40 bits | bMove | 1 en cas de détection de mouvement |
| 1x40 bits | bDetect | 1 si un mouvement est détectable |
| 1 bit | bFilmMode | 1 si mode film |
| 1 bit | bPhotoShot | 1 si mode film en cours de détection |
| 1 bit | bBreak | 1 si rupture de cadence |
| 1 bit | bMerge | indique une fusion prochaine entre deux régions |
| 1 bit | bFree | 1 si les blocs d'une région doivent être libérés |
| 8 bits | ucPattern | Indice de motif |
| 8 bits | ucPhase | Indice de phase de cadence |
| 8 bits | ucCountMiss | Compteur du nombre de non concordances |
| 32 bits | ulCountBlocks | Compteur du nombre de blocs d'une région |
| 5x32 bits | ulCountColor | Compteurs du nombre de blocs de chaque couleur dans une région |

### Unité de contrôle de détection

Pour revenir à la figure 10, le DCU 92 contrôle la détection de cadence par région, en utilisant les données transmises à l'étape 114 de l'algorithme de la figure 12.

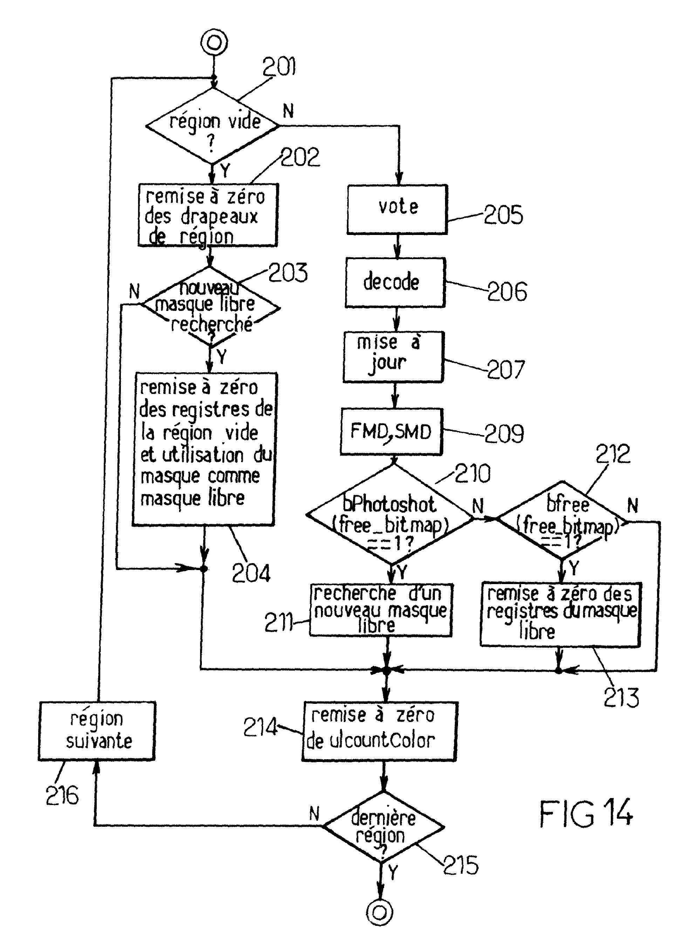

La figure 14 est un exemple d'algorithme de détection de cadence par région applicable à chaque trame n.

Pour chaque région, un vote (étape 205) est effectué à partir des statistiques calculées par le SSU (étape 114 de la figure 12), afin d'attribuer une phase de mouvement de région C(k,n) à la région, par exemple en utilisant l'algorithme de la figure 13. Les étapes de cet algorithme sont mises en oeuvre au niveau des régions.

L'algorithme de la figure 13 utilise un seuil t_major block pour décider si l'une des couleurs rouge ou verte prédomine nettement sur l'autre. Dit autrement, ce seuil est utilisé pour associer à la région une phase de mouvement de région de type film. La valeur de ce seuil peut être déterminée empiriquement.

La phase de mouvement majoritaire est décodée (étape 206 sur la figure 14) en trois signaux binaires Still, Detect et Move. La table de correspondance ci-dessous peut être utilisée :

|        | Noir | Gris | Rouge | Vert | Blanc |
|--------|------|------|-------|------|-------|
| Still  | 1    | 0    | 0     | 0    | 0     |
| Detect | 0    | 0    | 1     | 1    | 1     |
| Move   | 0    | 0    | 0     | 1    | 1     |

L'algorithme comprend également une étape 207 de mise à jour des registres à décalage bStill, bDetect et bMove. Ces registres sont décalés d'une position afin de libérer l'espace pour stocker les valeurs des trois signaux correspondant à la trame n. Ces registres de par exemple 40 bits enregistrent l'historique de la région pour les 40 dernières trames. Les valeurs des trois signaux Still, Detect et Move décodés à la trame n sont écrites dans les positions ainsi libérées dans les registres bStill, bDetect et bMove correspondants.

Après ces mises à jour, le DCU demande (étape 209) au FMD et au SMD d'effectuer respectivement une détection de mode film et une détection d'image fixe ("still mode" en anglais). Ces détections sont détaillées plus loin.

En cas de détection d'un mode film, le FMD positionne à '1' un drapeau de région nommé bFilmMode.

Si il apparaît qu'une cadence particulière se dégage pour la région correspondant au masque libre, le drapeau de région bPhotoShot est positionné. Le paramètre count_hits représente le délai entre le front montant de ce drapeau et le front montant du drapeau bFilmMode. Lorsque le drapeau bPhotoShot est positionné par le FMD, le masque correspondant à cette région n'est plus utilisé comme masque libre ("free bitmap" en anglais), c'est-à-dire qu'il n'est plus susceptible de recevoir des nouveaux blocs (étapes 116 à 119 de la figure 12). Un nouveau masque libre doit ainsi être recherché (étape 211) suite à un test 210 positif quant à la valeur du drapeau bPhotoShot du masque libre.

Si aucune cadence n'est trouvée pour une région pendant un nombre de trames donné par le paramètre count_miss, alors le drapeau de région bFree est positionné par le FMD.

Si le drapeau bFree correspondant au masque libre est à '1' (test 212), les blocs de la région correspondante ne sont pas libérés. Les registres correspondant à cette région y compris les drapeaux de région sont remis à zéro, à l'exception d'un registre ulCountBlocks servant à compter les blocs appartenant à la région.

Si le drapeau bFree correspondant à un autre masque est à '1', alors les blocs de la région correspondante sont libérés lors de la segmentation de la trame suivante n+1 (étapes 105 et 107 de la figure 12). La région est alors vide, soit ulCountBlocks = 0.

Lorsqu'une région est vide (étape 201), les drapeaux de région correspondants sont remis à zéro (étape 202) et si un nouveau masque libre est recherché (étape 203), alors les registres de la région vide sont remis à zéro et le masque correspondant à cette région est utilisée comme masque libre (étape 204). On peut noter qu'une région peut se vider sur requête du fait d'un positionnement du drapeau bFree correspondant, ou bien si tous les blocs de la région ont été libérés lors de segmentations (étapes 107 et 115 de la figure 12).

Des registres de statistiques de couleurs ulCountColor sont remis à zéro (étape 214) avant de passer à une autre région (étapes 215 et 216).

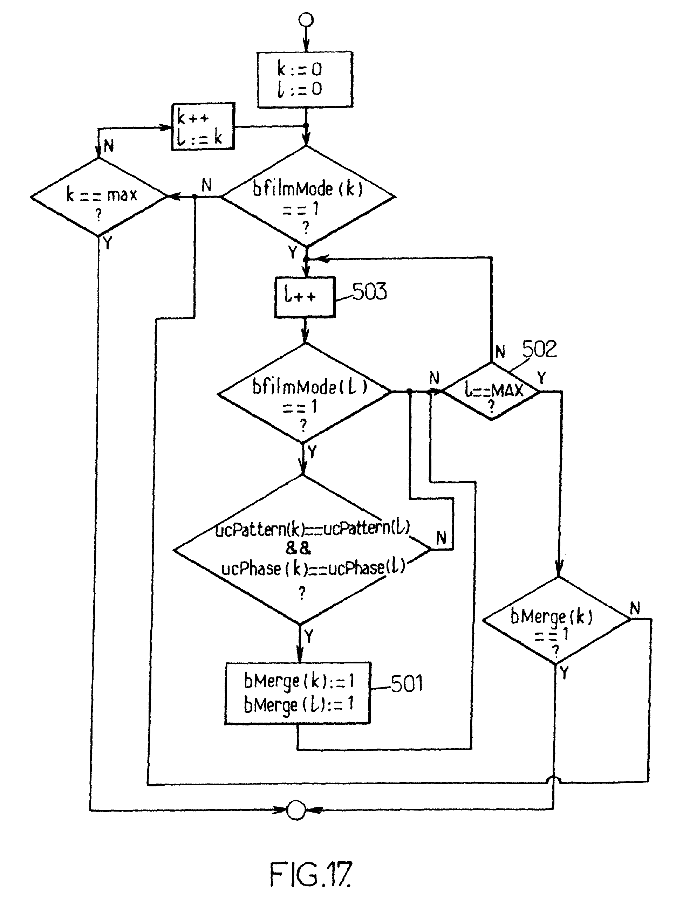

Lorsque toutes les régions ont été traitées, le DCU regarde si certaines régions sont en phase, à des fins de fusion ("merging" en anglais) lors de la segmentation de la trame suivante n+1. L'algorithme de fusion est détaillé plus loin, en référence avec la figure 17

**Détection de Mode Film**

Le FMD effectue une recherche de motifs parmi les bits d'un ou plusieurs des registres de 40 bits bDetect et bMove.

En effet, pour par exemple une région résultant d'une conversion 3:2, le registre bMove correspondant peut comprendre, outre des '0' significatifs d'une absence de mouvement au niveau de la région, des motifs '10010'. Pour une région résultant d'une acquisition vidéo, on n'observera probablement pas de motifs à proprement parler, mais des séquences de '1'. Le tableau ci-dessous montre quelques exemples de conversions et les motifs associés :

| Nom | Longueur du motif | Motif | Usage |
|---|---|---|---|
| « 2:2 » | 2 | « 10 » | Conversion d'images film |
| « 3:2 » | 5 | « 10010 » | Conversion d'images film |
| « 2:2:2:4 » | 10 | « 1010101000 » | DVCAM |
| « 2:3:3:2 » | 10 | « 1010010010 » | DVCAM |
| « 5:5 » | 10 | « 1000010000 » | Animation |
| « 6:4 » | 10 | « 1 000001 000 » | Animation |
| « 3:2:3:2:2 » | 12 | « 100101001010 » | Diffusion accélérée pour laisser davantage de temps aux publicités |
| « 8:7 » | 15 | « 100000001000000 » | Animations japonaises |

La recherche de motifs met en oeuvre un certain nombre de registres. On peut citer, pour chaque motif détectable :

- un registre de par exemple 20 bits bPhase destiné à recevoir ledit motif, par exemple « 10010 » ;
- un registre ucLength de par exemple 8 bits pour mémoriser la longueur du motif, par exemple 5, et
- un registre ucDelay de par exemple 8 bits, pour mémoriser un paramètre de longueur intervenant dans la détection, par exemple, la longueur des flots de bits de cadence ("cadence bit-stream" en anglais) auxquels le contenu du registre bMove est comparé bit par bit.

Pour chaque conversion détectable, et pour chaque phase de cadence, le FMD génère un flot de bits de cadence, par exemple les cinq flots « 1001010010... », « 0010100101001... », « 010100101001... », « 101001010010... » et « 01001010010... » dans le cas d'une conversion 3:2. Si l'un de ces flots de bits concorde avec le flot de bits mémorisé dans le registre bMove, alors une cadence film est détectée. On peut utiliser l'équation logique suivante:

bHit1 = (bPhase AND bMove) OR (NOT(bPhase) AND NOT(bMove)),
où bHit1 est un bit de succès représentant une concordance au niveau d'un bit.

La longueur de chaque flot de bits de cadence est définie dans le registre ucDelay. Toutefois, tant qu'aucune cadence n'est détectée, cette longueur est réduite de la valeur du paramètre count_hits, afin que le drapeau bPhotoShot puisse être positionné avant le drapeau bFilmMode.

Un compteur ucCountMiss compte le nombre de trames pour lesquelles on observe une non concordance ("mismatch" en anglais) entre le registre bMove et le flot de bits de cadence correspondant à la cadence et la phase de cadence recherchées. Lorsque le compteur ucCountMiss atteint le nombre count_miss, le drapeau de région bFree est positionné afin de libérer les blocs de la région correspondante.

Lorsque, suite au positionnement du drapeau bPhotoShot, tous les bits d'un flot de longueur restaurée à la valeur définie dans le registre ucDelay concordent avec les bits du registre bMove, le drapeau bFilmMode est positionné, un indice du motif correspondant à ce flot donné est mémorisé dans le registre ucPattern, le compteur ucCountMiss et le drapeau de région bBreak sont remis à zéro. La phase de cadence correspondant au flot donné est mémorisée dans un registre ucPhase, afin d'être utilisée lors de la segmentation suivante pour détecter une rupture de phase (étape 110 de la figure 12).

On considère alors que la cadence est verrouillée, c'est-à-dire qu'il ne suffit pas d'un bit bHit1 de succès à zéro pour abaisser le drapeau bFilmMode. On utilise un bit bHit2 défini ci-dessous.

Lorsque le drapeau bFilmMode est positionné à '1', l'indice du motif et la phase de cadence respectivement mémorisés dans les registres ucPattern et ucPhase sont utilisés pour générer un prochain bit attendu bPhase. Ce bit attendu est comparé à une phase de mouvement détectable afin de repérer une éventuelle rupture de cadence. On peut utiliser l'équation logique suivante :

$$bHit2 = bHit1 \text{ OR } (bPhase \text{ AND } NOT(bMove)) \tag{1}$$

Dit autrement, même dans le cas où bHit1 = 0, si un mouvement est attendu et qu'aucun mouvement n'est détecté, on ne détecte pas de non concordance. On considère en effet qu'une image fixe ne constitue pas une condition de rupture.

Alternativement et avantageusement, on utilise l'équation logique suivante :

$$bHit2 = bHit1 \text{ OR } (bPhase \text{ AND NOT}(bMove) \text{ AND NOT}(bDetect)) \quad (2)$$

Dit autrement, si la région est associée à une couleur rouge alors qu'une couleur verte était attendue, on détecte une non concordance. En revanche, si la couleur à laquelle la région est associée est le noir ou le gris, on considère qu'il y a concordance.

L'équation (2) permet ainsi de repérer plus rapidement des erreurs de montage. Si, à une région correspond la séquence "10010100II0010100..." la double barre verticale représentant une coupure au montage, la formule (1) conduit à une non concordance seulement pour la troisième trame après la coupure. La formule (2) conduit à une non concordance pour la deuxième trame après la coupure : on gagne ainsi une trame. Les artefacts introduits par un désentrelacement inadéquat affectent une trame en moins.

En cas de rupture de cadence, c'est-à-dire bHit2 = 0, le drapeau de region bBreak est positionné et le drapeau bFilmMode est remis à zéro. Une détection de mode film recommence, avec une recherche de motif pour chaque phase de cadence de chaque motif détectable.

**Détection d'absence de mouvement**

Le SMD compte le nombre de '1' successifs dans le registre de 40 bits bStill. Lorsque ce nombre atteint la valeur du paramètre programmable count_still, le drapeau de région bStillMode correspondant est positionné. Le drapeau bFree est remis à zéro afin d'éviter de libérer les blocs de cette région du fait de la non détection d'une cadence par le FMD. Le drapeau bStillMode est remis à zéro si un '0' est trouvé dans les bits suivants du registre bStill.

**Filtre des régions**

Les régions R(k,n) résultant de la segmentation sont filtrées avant d'être mémorisées dans la mémoire de carte des régions (référence 13 sur la figure 1). Pour chaque bloc d'une région, le filtre des régions (référence 24 sur la figure 2) utilise le voisinage de {3x3} blocs ainsi que les voisinages de {2x2} blocs, comme illustré sur la figure 15. La référence 151 montre le voisinage {3x3}, entouré de tirets, d'un bloc 150. La référence 152 montre un des voisinages {2x2}, entouré d'un trait plein, du bloc 150.

La fonction ONE(i,j,n,k) est calculée, cette fonction retournant un 1 si le bloc à la position i,j pour la trame n appartient à la région k, et un 0 dans le cas contraire. En particulier, pour un bloc à une position i,j en dehors de la trame n, la fonction ONE(i,j,n,k) retourne un 0.

La fonction ALL(i,j,n) effectue une sommation sur les blocs du voisinage {3x3} d'un bloc à la position (i,j) des fonctions ONE de ces blocs, pour toutes les régions :

$$ALL(i,j,n) = \sum_{k} \sum_{(u,v) \in \{3x3\}} ONE(i+u, j+v, n, k)$$

La fonction N(i,j,n,k) retourne le nombre de blocs dans voisinage {3x3} qui appartiennent à une région k :

$$N(i,j,n,k) = \sum_{(u,v) \in \{3x3\}} ONE(i+u, j+v, n, k)$$

La région majoritaire du voisinage {3x3} d'un bloc à la position (i,j), d'une trame n est celle pour laquelle la fonction N(i,j,n,k) est la plus élevée.

Lorsqu'un bloc d'une région k est fusionné dans la région m, alors la valeur de M(i,j,n) en sortie du filtre est égale à m.

Un bloc à la position (i,j) est dit être un coin de région si l'un de ses voisinages {2x2} est formé de blocs n'appartenant pas à la région du bloc à la position (i,j)..

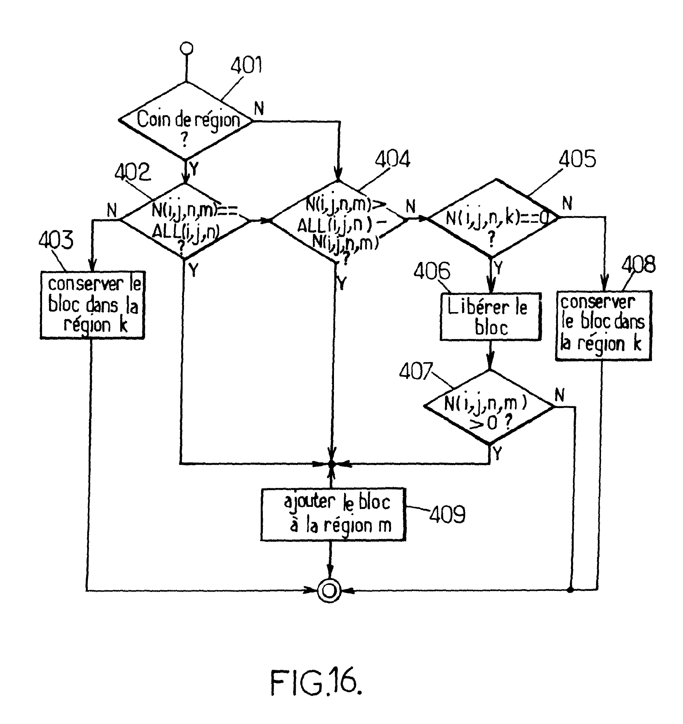

L'algorithme de la figure 16 peut par exemple être mis en oeuvre pour effectuer le filtrage par régions. Cet algorithme est appliqué au niveau bloc.

Pour un bloc donné, si ce bloc est un coin de région (test 401), alors l'indice de la région k est conservé (étape 403), à moins que le bloc ne soit isolé parmi des blocs d'une autre région indicée m (test 402), auquel cas le bloc est transféré de la région k à la région m (étape 409).

Si le bloc n'est pas un coin de région (test 401) et qu'il est entouré par une région majoritaire (test 404), alors il est ajouté à la région majoritaire (étape 409). Si le bloc n'est pas entouré d'une région majoritaire (test 404), mais qu'il est isolé (test 405), alors le bloc est libéré (étape 406), et s'il n'est pas entouré de blocs libres (test 407) alors il est ajouté à une région majoritaire (étape 409). Si le bloc n'est pas isolé (test 405), alors il reste dans la région (étape 408).

**Table de paramètres utilisés**

La table ci-dessous regroupe un ensemble de paramètres utilisés dans la mise en oeuvre du mode de réalisation décrit :

| taille | Nom | description |
|--------|-----|-------------|
| 32 bits | t_move | Seuil de mouvement de pixel |
| 32 bits | t_cfd | Seuil de différence de mouvement de pixel |
| 32 bits | t_major_pixel | Seuil de majorité dans la vote de couleur de bloc |
| 32 bits | t_major_block | Seuil de majorité dans la vote de couleur de région |
| 32 bits | count_hits | Délai entre les positionnements des drapeaux bPhotoShot et bFilmMode |
| 32 bits | count_miss | Délai dans la détection de mode film |
| 32 bits | count_still | Délai dans la détection d'absence de mouvement |

**Algorithme de fusion**

La figure 17 est un exemple d'algorithme de fusion : les régions sont balayées à l'aide des indices k, l. Si une même cadence et une même phase de cadence sont détectées pour deux régions distinctes, alors les drapeaux bMerge de ces régions sont positionnés (étape 501). Avantageusement, suite à l'étape 501, on continue à parcourir l'indice l (étapes 502 et 503), afin de permettre de fusionner plus de deux régions à la fois.

**Revendications**

1. Procédé de détection de cadence d'une séquence d'images, comprenant les étapes consistant à
   pour chaque trame courante de la séquence d'images, comparer chaque pixel d'un groupe de pixels de la trame courante à au moins un pixel d'au moins une trame précédente,
   attribuer à chaque pixel du groupe de pixels de la trame courante une valeur de phase de mouvement de pixel ($P(x,y,n)$) en fonction du résultat desdites au moins une comparaisons,
   pour chaque bloc de pixels d'un groupe de blocs de pixels de la trame courante, déterminer une valeur de phase de mouvement de bloc ($B(i,j,n)$) à partir des valeurs de phase de mouvement des pixels dudit bloc,
   segmenter la trame courante en au moins une région, chaque région comprenant un nombre entier de blocs, en fonction au moins des valeurs de phase de mouvement de bloc déterminées, et
   attribuer à chaque région une valeur de phase de mouvement de région ($C(k,n)$) à partir des valeurs de phases de mouvement de bloc des blocs de ladite région.

2. Procédé de détection de cadence selon la revendication 1, dans lequel
   l'étape de segmentation est effectuée en utilisant au moins une région obtenue lors d'une segmentation effectuée sur une trame précédente.

3. Procédé de détection de cadence selon l'une des revendications 1 à 2, dans lequel
   l'étape de segmentation est effectuée en utilisant au moins une valeur de phase de mouvement de région ($C(k-1,n)$) obtenue pour une trame précédente.

**4.** Procédé de détection de cadence selon l'une des revendications précédentes, comprenant en outre les étapes consistant à

pour au moins une région, mettre à jour un historique de la région à l'aide de la valeur de la phase de mouvement de région (C(k,n)) de ladite région, et

rechercher dans l'historique un motif de cadence.

**5.** Procédé de détection de cadence selon la revendication 4, comprenant en outre l'étape consistant à

si un même motif de cadence et une même phase de cadence sont détectées pour deux régions distinctes, fusionner lesdites régions en une seule région.

**6.** Procédé de détection de cadence selon l'une des revendications précédentes, comprenant l'étape consistant à

détecter une rupture de cadence si une phase d'absence de mouvement film est attribuée à la région alors qu'une phase de mouvement film était est attendue.

**7.** Dispositif détecteur de cadence (11) d'une séquence d'images, comprenant

un détecteur de phase de mouvement de pixel (32) agencé pour comparer les pixels d'un groupe de pixels de chaque trame courante de la séquence d'images à au moins un pixel d'au moins une trame précédente, et pour attribuer à chaque pixel du groupe de pixels de la trame courante une valeur de phase de mouvement de pixel (P(x,y,n)) en fonction du résultat desdites au moins une comparaisons,

des moyens de filtrage statistiques par bloc (33) pour, pour chaque bloc de pixels d'un groupe de blocs de pixels de la trame courante, déterminer une valeur de phase de mouvement de bloc (B(i,j,n)) à partir des valeurs de phase de mouvement des pixels dudit bloc,

une unité de segmentation (91) pour segmenter la trame courante en au moins une région, en fonction au moins des valeurs de phase de mouvement de bloc déterminées, chaque région comprenant un nombre entier de blocs, et

des moyens de calcul (91,92) pour attribuer une valeur de phase de mouvement de région (C(n,k)) à chaque région à partir des valeurs de phase de mouvement de bloc des blocs de ladite région.

**8.** Dispositif détecteur de cadence selon la revendication 7, comprenant en outre

une mémoire de carte des régions (13) pour mémoriser des paramètres d'au moins une région obtenue lors d'une segmentation effectuée sur une trame précédente, ladite mémoire étant reliée à l'unité de segmentation.

**9.** Dispositif détecteur de cadence selon l'une des revendications 7 ou 8, comprenant en outre

pour au moins une région, des moyens de mise à jour d'un historique de la région à l'aide de la valeur de phase de mouvement de région (C(k,n)) de ladite région, et

des moyens de recherche dans l'historique d'un motif de cadence.

**10.** Système de traitement d'une séquence d'images, comprenant

un dispositif détecteur de cadence (11, 13) selon l'une des revendications 7 à 9, et

un dispositif de traitement (12) relié au dispositif détecteur de cadence.

**11.** Système de traitement selon la revendication 10, dans lequel

le dispositif de traitement comprend un dispositif de désentrelacement (12).

**12.** Poste de télévision comprenant un système de traitement selon l'une des revendications 10 ou 11.

**13.** Décodeur de télévision numérique comprenant un système de traitement selon l'une des revendications 10 ou 11.

FIG.1.

FIG.2.

FIG.3.

# FIG.4.

# FIG.7

P(x,y,n):=BLACK

P(x,y,n):=GREY

P(x,y,n):=WHITE

P(x,y,n):=RED

P(x,y,n):=GREEN

M13 > t_move

|M12-M23| > t_cfd

(M12>t_move) ET (M23>t_move)

M12>M23

FIG.5A.

FIG.5B.

FIG.5C.

FIG.5D.

FIG.5E.

FIG.6A.

FIG.6B.

FIG.6C.

FIG.6D.

FIG.6E.

n-1　　　　　n　　　　　n+1　　　　　n+2

FIG.8A.　　FIG.8B.　　FIG.8C.　　FIG.8D.

EP 1 865 717 A1

# FIG.9.

```
        ○
        │
        ▼
   ◇ GROUP>0 ◇ ────N───────────────────────────▶ ┌─────────────────┐
        │                                          │ B(i,j,n):=BLACK │
        Y                                          └─────────────────┘
        │
        ▼
  ◇ |GREEN-RED| ◇ ──N──▶ ◇ GREEN>RED ◇ ──N──▶ ┌───────────────┐
  ◇     <      ◇         ◇           ◇         │ B(i,j,n):=RED │
  ◇ t_major_pixel ◇                            └───────────────┘
        │                      │
        Y                      Y
        │                      ▼
        │                ┌─────────────────┐
        │                │ B(i,j,n):=GREEN │
        │                └─────────────────┘
        ▼
   ◇ (WHITE>0) ◇ ──N────────────────────────────▶ ┌────────────────┐
   ◇ (GREEN>0) ◇                                   │ B(i,j,n):=GREY │
   ◇ ( RED>0) ◇                                    └────────────────┘
        │
        Y
        │
        │                                          ┌─────────────────┐
        └─────────────────────────────────────────▶│ B(i,j,n):=WHITE │
                                                    └─────────────────┘
```

# FIG.10.

```
              M(i,j,n-1)
                  │
                  ▼
          ┌───────────────┐
B(i,j,n)  │    ┌──────┐   │  R(i,j,n)
──────────▶│    │ SSU  │───┼────────▶
          │    └──────┘   │      91
          │       ↕       │
          │    ┌──────┐   │
          │    │ DCU  │   │      23
          │    └──────┘   │  92
          └───────┬───────┘
                  │
       ┌──────────┼──────────┐
       ▼          ▼          ▼
   ┌───────┐  ┌───────┐  ┌───────┐
26 │  FMD  │  │ ctrl  │  │  SMD  │ 27
   └───────┘  └───────┘  └───────┘
              25
```

FIG.11.

| B2 | free_bitmap |
| B1 | 2-2_pulldown |
| B0 | still_picture |

FIG.15.

EP 1 865 717 A1

FIG.12.

# FIG.13.

GROUP > 0 ? — N → $C(k,n):=BLACK$

Y ↓

WHITE < 50% ? — N → $C(k,n):=WHITE$

Y ↓

GREEN < 12,5% OU RED < 12,5% ? — N → $C(k,n):=WHITE$

Y ↓

|GREEN−RED| < t_major_block ? — N → GREEN > RED ? — N → $C(k,n):=RED$

GREEN > RED ? Y → $C(k,n):=GREEN$

|GREEN−RED| Y → $C(k,n):=GREY$

région vide ? — 201

remise à zéro des drapeaux de région — 202

vote — 205

decode — 206

mise à jour — 207

FMD,SMD — 209

nouveau masque libre recherché ? — 203

remise à zéro des registres de la région vide et utilisation du masque comme masque libre — 204

bPhotoshot (free_bitmap) ==1 ? — 210

bfree (free_bitmap) ==1 ? — 212

recherche d'un nouveau masque libre — 211

remise à zéro des registres du masque libre — 213

région suivante — 216

remise à zéro de ulcountColor — 214

dernière région ? — 215

FIG 14

FIG.16.

FIG.17.

**Office européen
des brevets**

**RAPPORT DE RECHERCHE EUROPEENNE**

Numéro de la demande

EP 07 10 9661

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 1 592 250 A (MATSUSHITA ELECTRIC INDUSTRIAL) 2 novembre 2005 (2005-11-02) * le document en entier * ----- | 1,7, 11-13 | INV. H04N7/01 |
| A | EP 0 720 366 A (THOMSON CONSUMER ELECTRONICS) 3 juillet 1996 (1996-07-03) * figures 15,17 * ----- | 1,7, 11-13 | |

DOMAINES TECHNIQUES RECHERCHES (IPC)

H04N
G06T

Le présent rapport a été établi pour toutes les revendications

| Lieu de la recherche | Date d'achèvement de la recherche | Examinateur |
|---|---|---|
| La Haye | 7 septembre 2007 | Berwitz, Philippe |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................................

& : membre de la même famille, document correspondant

EPO FORM 1503 03.82 (P04C02)

**EP 1 865 717 A1**

ANNEXE AU RAPPORT DE RECHERCHE EUROPEENNE
RELATIF A LA DEMANDE DE BREVET EUROPEEN NO.

EP 07 10 9661

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-09-2007

| Document brevet cité au rapport de recherche | | Date de publication | Membre(s) de la famille de brevet(s) | | Date de publication |
|---|---|---|---|---|---|
| EP 1592250 | A | 02-11-2005 | JP | 2005318611 A | 10-11-2005 |
| | | | KR | 20060047556 A | 18-05-2006 |
| | | | US | 2005249282 A1 | 10-11-2005 |
| EP 0720366 | A | 03-07-1996 | CN | 1132437 A | 02-10-1996 |
| | | | DE | 69514771 D1 | 02-03-2000 |
| | | | DE | 69514771 T2 | 16-11-2000 |
| | | | ES | 2141882 T3 | 01-04-2000 |
| | | | JP | 3908802 B2 | 25-04-2007 |
| | | | JP | 9018784 A | 17-01-1997 |
| | | | PT | 720366 T | 31-07-2000 |
| | | | SG | 50388 A1 | 20-07-1998 |
| | | | US | 5563651 A | 08-10-1996 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 02056597 A